# EUROPÄISCHE PATENTSCHRIFT

(11) **EP 1 176 395 B1**
(45) Veröffentlichungstag und Bekanntmachung des Hinweises auf die Patenterteilung: **06.10.2004**
(21) Anmeldenummer: 01115268.3
(22) Anmeldetag: 25.06.2001
(51) Int. Cl.: G01C 21/36, G08G 1/0968

(54) **Verfahren zur Auswahl einer Ortsbezeichnung in einem Navigationssystem durch Spracheingabe**
Method for the selection of the designation of a place in a system of navigation via voice input
Dans un système de navigation, méthode de sélection de la designation d'un lieu via un interface vocal

(30) Priorität: 28.07.2000 DE 10036851
(43) Veröffentlichungstag der Anmeldung: 30.01.2002
(73) Patentinhaber: SIEMENS AKTIENGESELLSCHAFT, 80333 München (DE)
(72) Erfinder: Rühl, Hans-Wilhelm, Dr., 35606 Solms (DE)

(56) Entgegenhaltungen:
- WO-A-98/27531
- DE-A- 19 742 054
- DE-C- 19 709 518

## Beschreibung

Die Erfindung betrifft ein Verfahren zur Auswahl einer Ortsbezeichnung in einem Kraftfahrzeug-Navigationssystem durch Spracheingabe. Weiterhin betrifft die Erfindung ein Navigationssystem mit einem Spracheingabesystem zur Umwandlung von gesprochenen Worten in Merkmale bzw. eine Folge von Merkmalen, einem nicht-flüchtigen Speicherelement als erste Datenquelle, die eine Liste mit Ortsbezeichnungen enthält, einer zweiten Datenquelle, die einen Teil der Daten der ersten Datenquelle enthält, einer Steuereinheit zur Auswahl einer Ortsbezeichnung aufgrund der von dem Spracheingabesystem gelieferten Folge von Merkmalen.

Navigationssysteme für Kraftfahrzeuge sind seit längerem bekannt und werden zunehmend in Neufahrzeugen oder zur Nachrüstung angeboten. Solche Navigationssysteme enthalten ein Speichermedium mit den Straßenkartendaten eines oder mehrerer Länder. Vor Fahrtantritt kann der Benutzer eine Routenberechnung zu seinem Zielort vornehmen lassen und sich anschließend durch das Navigationssystem zu dem ausgewählten Zielort leiten lassen. Bei den zur Zeit angebotenen Navigationssystemen erfolgt die Eingabe des Zielortes in der Regel manuell. Darüber hinaus sind jedoch auch bereits Navigationssysteme bekannt, bei denen die Auswahl eines Zielortes durch Spracheingabe erfolgt. Problematisch hierbei ist jedoch, daß bei einem Navigationssystem, abhängig von der Größe des auf dem Speichermedium abgespeicherten geographischen Bereichs, mehrere 10.000 Ortsnamen und mehrere 1000 Straßennamen als Ortsbezeichnungen für die Zieleingabe in Frage kommen. Bekannte Spracherkennungseinrichtungen sind dagegen auf die Erkennung von wesentlich weniger Worten, bspw. etwa 1000, ausgelegt. Darüber hinaus dauert die Suche in einem solch großen Datenbestand entsprechend lange.

Aus der DE 197 42 054 A1 ist ein Eingabesystem für Orts- und/oder Straßennamen bekannt, das eine Datenquelle enthält, die außer einer ersten Orts- und/oder Straßenliste mit alphabetisch sortierten Orts- und/oder Straßennamen wenigstens eine zweite Orts- und/oder Straßenliste mit nach einem Häufigkeitskriterium sortierten Orts- und/oder Straßennamen enthält. Als Häufigkeitskriterium wird insbesondere die Anzahl der Einwohner eines Ortes oder die Anzahl der in einer Straße wohnenden Einwohner gewählt. Die Suche nach einer eingegebenen Ortsbezeichnung wird zunächst in der zweiten Liste und nur dann, wenn in dieser zweiten Liste der eingegebene Ort nicht gefunden wurde, in der ersten vollständigen Liste durchgeführt. Hierdurch werden bspw. Großstädte als Zielorte sehr schnell gefunden. Die Eingabe der Ortsbezeichnungen kann über ein Spracheingabesystem erfolgen, das aber nicht näher beschrieben ist.

Aus der DE 197 09 518 C1 ist ein Verfahren und eine Vorrichtung zur Spracheingabe einer Zieladresse in ein Navigationssystem im Echtzeitbetrieb bekannt. Das Spracherkennungssystem weist sowohl einen sprecherunabhängigen und einen sprecherabhängigen Spracherkenner auf, wobei der sprecherunabhängige Spracherkenner auf der Basis von Phonemen arbeitet. Um die Echtzeitspracherkennung zu gewährleisten, werden die Adressdaten verschiedenen Lexika zugeordnet. Ein solches Lexikon stellt dann immer eine Untermenge aller abgespeicherten Adressdaten dar und weist maximal 1500 Einträge auf. Es ist ein Grundlexikon vorgesehen, das circa 1000 Einträge der Orte mit mehr als 10.000 Einwohnern aufweist. Daneben sind Lexika für einzelne Regionen oder Umgebungen vorgesehen. Dieses Verfahren ist jedoch auf Grund der Vielzahl der Lexika und der Erfordernis von zwei Durchläufen der Spracherkennung sehr aufwendig. Zudem müssen die Daten bereits entsprechend aufbereitet und verschiedenen Lexika zugeordnet sein.

Aufgabe der Erfindung ist es daher, ein Verfahren zur Auswahl einer Ortsbezeichnung in einem Kraftfahrzeug-Navigationssystem mit Spracheingabe anzugeben, das eine schnelle Ortsauswahl durch Spracheingabe der von einem Benutzer bereits früher ausgewählten Ortsbezeichnungen erlaubt. Eine weitere Aufgabe der Erfindung ist es, ein gattungsgemäßes Navigationssystem derart auszubilden, daß es zur Durchführung dieses Verfahrens geeignet ist.

Die erstgenannte Aufgabe wird gelöst durch ein Verfahren zur Auswahl einer Ortsbezeichnung in einem Kraftfahrzeug-Navigationssystem, das eine erste und eine zweite Liste mit Ortsbezeichnungen enthält, wobei in der zweiten Liste eine Teilmenge der in der ersten Liste enthaltenen Ortsbezeichnungen zusammen mit den Phonemen dieser Ortsbezeichnungen abspeicherbar ist, mit den Verfahrensschritten:
- Spracheingabe einer Ortsbezeichnung über ein Spracheingabesystem
- Bestimmung von Merkmalen der gesprochenen Ortsbezeichnung
- Vergleichen der Merkmale der gesprochenen Ortsbezeichnung mit Merkmalen der abgespeicherten Phoneme der Ortsbezeichnungen in der zweiten Liste und entweder:
   - Auswahl einer Ortsbezeichnung bei hinreichender Übereinstimmung der Merkmale der gesprochenen Ortsbezeichnung mit den Merkmalen der Phoneme einer abgespeicherten Ortsbezeichnung der zweiten Liste, oder andernfalls
   - Anfordern einer weiteren Eingabe der Ortsbezeichnung in einer zweiten von der Spracheingabe der Ortsbezeichnung abweichenden Eingabeform,
   - Auswählen einer Ortsbezeichnung aus der ersten Liste anhand der zweiten Eingabeform,
   - Abspeichern der ausgewählten Ortsbezeichnung und der Phoneme der gesprochenen Ortsbezeichnung in der zweiten Liste. Der Vergleich zwischen den Merkmalen der gesprochenen Ortsbezeichnung mit den Merkmalen der abgespeicherten Phoneme erfolgt dabei mit Hilfe bekannter Verfahren zum Mustervergleich.

Das erfindungsgemäße Verfahren verwendet ein sprecherunabhängiges Spracheingabesystem, so daß ein spezielles Training zur Spracherkennung nicht erforderlich ist. In einer ersten Liste sind alle Ortsbezeichnungen die auf dem zugehörigen Speicherelement vorhanden sind, abgespeichert. Unter Ortsbezeichnung werden hierbei sowohl Ortsnamen als auch Straßennamen verstanden. Gegebenenfalls kann die erste Liste in zwei Teillisten, nämlich eine für die Ortsnamen und eine für Straßennamen aufgeteilt sein. In die zweite Liste werden nur diejenigen Ortsbezeichnungen eingetragen, die von einem Nutzer bereits einmal über Spracheingabe in das System eingegeben worden sind. In dieser zweiten Liste sind dazu sowohl die Ortsbezeichnung in Schriftform als auch eine stilisierte Form der gesprochenen Ortsbezeichnung in Form von Phonemen abgespeichert. Erfolgt nun eine erneute Spracheingabe einer Ortsbezeichnung über die Spracheingabeeinheit so werden zunächst in an sich bekannter Weise Merkmale bzw. eine Folge von Merkmalen der gesprochenen Ortsbezeichnung.bestimmt. Anschließend werden diese Merkmale der gesprochenen Ortsbezeichnung mit den Merkmalen der in der zweiten Liste abgespeicherten Phoneme von Ortsbezeichnungen verglichen. Wird eine hinreichende Übereinstimmung mit einer abgespeicherten Ortsbezeichnung gefunden, so wird diese Ortsbezeichnung ausgewählt. Aufgrund der relativ geringen Anzahl von Ortsbezeichnungen in der zweiten Liste, erfolgt diese Auswahl in Echtzeit.

Konnte die eingegebene Ortsbezeichnung in der zweiten Liste nicht gefunden werden, so wird der Nutzer aufgefordert , die Ortsbezeichnung in einer zweiten Eingabeform einzugeben. Bei dieser zweiten Eingabeform kann es sich bspw. um die manuelle Eingabe der Ortsbezeichnung handeln oder um eine Spracheingabe in Form von Zahlen oder Buchstaben. In letzterem Falle buchstabiert der Nutzer bspw. die Ortsbezeichnung oder er gibt die Telefonvorwahl oder Postleitzahl des gesuchten Ortes ein. Anhand dieser zweiten Eingabeform wird die Ortsbezeichnung aus der ersten vollständigen Liste ausgewählt. Anschließend wird die ausgewählte Ortsbezeichnung zusammen mit den Phonemen der zuvor gesprochenen Ortsbezeichnung in der zweiten Liste abgespeichert, so daß sie bei einer erneuten Spracheingabe dieser Ortsbezeichnung auffindbar ist. Den Ortsbezeichnungen der ersten Liste können Datensätze zugeordnet sein, die bspw. nähere Informationen zu diesem Ort enthalten. In einer besonderen Ausführungsform ist vorgesehen, daß die Datensätze die einer Ortsbezeichnung der ersten Liste zugeordnet sind, nach dem Auswählen einer Ortsbezeichnung aus der ersten Liste anhand der zweiten Ausgabeform zusammen mit der ausgewählten Ortsbezeichnung in der zweiten Liste abgespeichert werden. Somit stehen auch die Informationen dieser Datensätze bei einer erneuten Auswahl dieses Ortes durch Spracheingabe sofort zur Verfügung.

Die Sortierung der Ortsbezeichnungen, insbesondere in der zweiten Liste, kann auf verschiedene Art erfolgen. Zum einen können die Ortsbezeichnungen alphabetisch abgespeichert sein. Zum anderen kann das Navigationssystem jedoch besser an die Gewohnheiten des jeweiligen Nutzers angepasst werden, wenn zusätzlich die Häufigkeit der Eingabe einer Ortsbezeichnung aufgezeichnet wird. In diesem Falle können nämlich die Ortsbezeichnungen der zweiten Liste nach der Häufigkeit ihrer Eingabe sortiert werden. Dies hat den Vorteil, daß die Ortsbezeichnung, die von dem jeweiligen Nutzer am häufigsten ausgewählt wird, in der zweiten Liste an erster Stelle steht. Sie wird somit bei einer erneuten Eingabe auch am schnellsten gefunden. Hierdurch ergibt sich eine besonders kurze Reaktionszeit des Systems für die häufig von dem Nutzer eingegeben und damit auch angefahrenen Orte.

In einer weiteren Ausgestaltung der Erfindung ist vorgesehen, daß die Ortsbezeichnungen der zweiten Liste in der Reihenfolge ihrer Eingabe abgelegt werden. Hierdurch stehen die zuletzt angefahrenen Fahrziele jeweils an oberster Stelle der zweiten Liste. Ein solches Verfahren ist dann von Vorteil, wenn einzelne Ziele nur in bestimmten Zeitabschnitten häufiger angefahren werden. Zudem sind weiterhin auch Kombinationen der zuvor beschriebenen Sortierkriterien möglich. So ist bspw. eine gewichtete Abspeicherung der Ortsbezeichnungen nach der Häufigkeit ihrer Eingabe und der Reihenfolge ihrer Eingabe denkbar.

Ein gattungsgemäßes Navigationssystem ist erfindungsgemäß dadurch gekennzeichnet, daß das Navigationssystem ein wiederbeschreibbares, nicht-flüchtiges Speicherelement als die zweite Datenquelle aufweist, wobei die zweite Datenquelle sowohl Ortsbezeichnungen als auch den Ortsbezeichnungen zugeordnete Phoneme der Ortsbezeichnungen enthält, die durch das Spracheingabesystem aufgrund der gesprochenen Ortsbezeichnung erzeugbar sind.

Vorzugsweise weist das Navigationssystem eine manuelle Eingabevorrichtung zur Eingabe von Ortsbezeichnungen in einer zweiten Eingabeform auf. Dies ist insbesondere dann vorteilhaft, wenn die Ortsbezeichnung durch Spracheingabe nicht identifizierbar ist.

Die Erfindung wird nachfolgend anhand von Ausführungsbeispielen und der Zeichnung näher erläutert.

Es zeigen:
- Figur 1: die wesentlichen Komponenten eines ersten Navigationssystems
- Figur 2: die wesentlichen Komponenten eines zweiten Navigationssystems
- Figur 3: ein Ablaufdiagramm des erfindungsgemäßen Verfahrens.

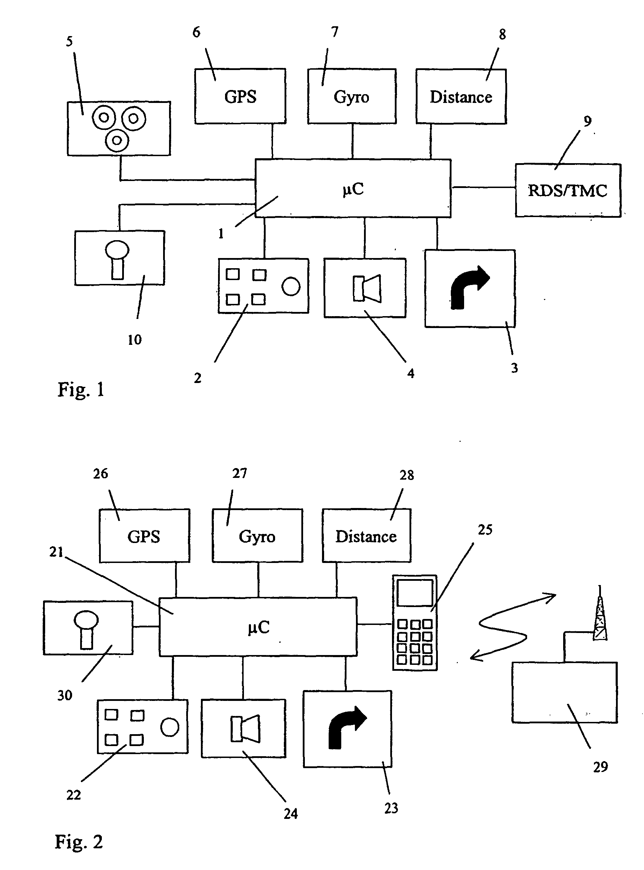

Das erfindungsgemäße Verfahren kann sowohl bei sogenannten On-Board Navigationssystemen als auch bei sogenannten Off-Board Navigationssystemen eingesetzt werden. Figur 1 zeigt die wesentlichen Komponenten eines On-Board Navigationssystems. Zentraler Bestandteil ist die Recheneinheit 1; die mit den zugehörigen Speicherelementen den Navigationscomputer bildet. Auf der Recheneinheit 1 laufen verschiedene Softwaremodule ab. Mit der Recheneinheit 1 verbunden ist eine manuelle Eingabeeinheit 2 und eine akustische Eingabeeinheit 10. Der mit der akustischen Eingabeeinheit 10 verknüpfte sprecherunabhängige Spracherkenner ist zum Beispiel als Softwaremodul auf der Recheneinheit 1 lauffähig. Mit der Recheneinheit 1 sind ferner eine optische Ausgabeeinheit 3 und eine akustische Ausgabeeinheit 4 verknüpft, über die Zielführungshinweise ausgegeben werden. Ferner enthält das Navigationssystem ein Lesegerät 5 für ein nicht dargestelltes Speichermedium, insbesondere eine CD-ROM. Auf dieser CD-ROM sind die Straßenkartendaten sowie eine Liste mit den Ortsbezeichnungen abgespeichert. Zur Positionsbestimmung des Fahrzeuges weist das Navigationssystem ferner einen GPS-Empfänger 6 zum Empfang von Satelliten-Navigationssignalen sowie einen Richtungssensor 7 und einen Wegstreckensensor 8 auf. Durch den Richtungssensor 7 und den Wegstreckensensor 8 ist eine Positionsbestimmung auch dann gewährleistet, wenn die für die Satelliten-Navigation erforderlichen Signale nicht oder nicht in ausreichender Qualität empfangbar sind. Weiterhin ist die zentrale Recheneinheit 1 mit einem Rundfunkempfänger 9 verknüpft, über den Verkehrsmeldungen empfangen und an die zentrale Recheneinheit 1 zur Berücksichtigung bei der Routenplanung weitergeleitet werden. Die erste vollständige Liste mit den Ortsbezeichnungen ist bei dieser Ausführungsform, wie bereits erwähnt, auf einer CD-ROM abgelegt. Die zweite Liste mit Ortsbezeichnungen ist demgegenüber in einem nicht-flüchtigen und wiederbeschreibbaren Speicherelement, das unmittelbar der Recheneinheit 1 zugeordnet ist, abgelegt. Die Erzeugung der Phoneme aufgrund der Spracheingabe einer Ortsbezeichnung erfolgt durch ein entsprechendes Softwaremodul in der Recheneinheit 1.

Figur 2 zeigt die wesentlichen Komponenten eines Off-Board Navigationssystems. Zentraler Bestandteil des Navigationssystems ist auch hier eine Recheneinheit 21 mit den zugehörigen Speicherelementen. Mit der Recheneinheit 21 ist eine manuelle Eingabeeinheit 22 und eine Spracheingabeeinheit 30 verbunden. Ferner sind auch, wie bei dem zuvor beschriebenen System, eine optische Ausgabeeinheit 23 und eine akustische Ausgabeeinheit 24 sowie zur Positionsbestimmung eine GPS-Empfangseinheit 26, ein Richtungssensor 27 und ein Wegstreckensensor 28 mit der Recheneinheit 21 verbunden. Abweichend von den in Figur 1 beschriebenen On-Board Navigationssystem enthält das Off-Board Navigationssystem jedoch keine Straßenkartendaten im Fahrzeug. Vielmehr ist die Recheneinheit 21 im gezeigten Beispiel mit einem Mobiltelefon 25 verbunden. Über eine Mobilfunkverbindung wird der über die Eingabeeinheiten 22 oder 30 eingegebene Zielort an eine Zentralstelle 29 übermittelt, in der die Straßenkartendaten abgespeichert sind. In dieser Zentralstelle wird die Routenberechnung vorgenommen und die Zielführungsinformationen werden über die Funkverbindung und das Mobilfunktelefon 25 an die Recheneinheit 21 zur Ausgabe über die optische Ausgabeeinheit 23 und/oder die akustische Ausgabeeinheit 24 weitergeleitet. Auch bei einem solchen Off-Board Navigationssystem kann die Auswahl einer Ortsbezeichnung nach dem erfindungsgemäßen Verfahren erfolgen. Die erste Liste mit den vollständigen Ortsbezeichnungen ist in der Zentralstelle 29 abgespeichert. Der Nutzer gibt über die Spracheingabeeinheit 30 die gewünschte Ortsbezeichnung akustisch ein. In der Recheneinheit 21 ist wiederum wie im zuvor beschriebenen Beispiel der Spracherkenner integriert. Weiterhin weist die Recheneinheit 21 ein nicht-flüchtiges Speicherelement auf, das die zweite Liste mit Ortsbezeichnungen und den dazugehörigen Phonemen aufweist.

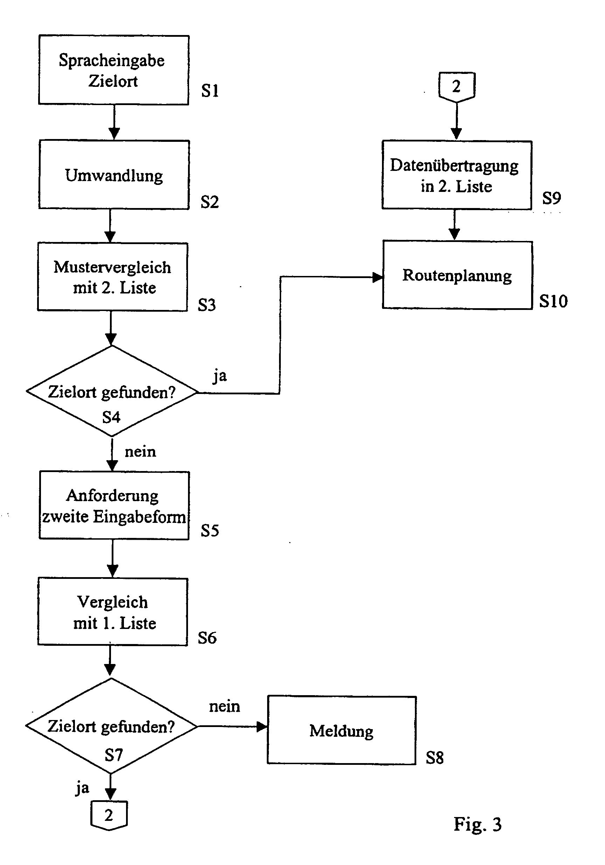

Das erfindungsgemäße Verfahren wird nachfolgend anhand des Ablaufsdiagramms in Figur 3 näher erläutert. In Schritt S1 gibt der Nutzer seinen gewünschten Zielort akustisch über die Spracheingabeeinheit in das Navigationssystem ein. In der Recheneinheit erfolgt die Bestimmung von Merkmalen des akustischen Signals (Schritt S2). In Schritt S3 wird ein Vergleich zwischen den Merkmalen des gesprochenen Zielortes mit den in der zweiten Liste in einem nicht-flüchtigen Speicherelement der zentralen Recheneinheit abgespeicherten Merkmalen der Phoneme durchgeführt. In Schritt S4 wird überprüft, ob eine Übereinstimmung vorhanden ist und damit der Zielort bereits gefunden ist. Ist dies der Fall, so kann in Schritt S10 mit dem gefunden Zielort direkt zur Routenplanung übergegangen werden. Bei einem On-Board Navigationssystem erfolgt diese Routenplanung durch ein entsprechendes Softwaremodul in der zentralen Recheneinheit während bei einem Off-Board Navigationssystem der so gefundene Zielort an die Zentralstelle übermittelt wird.

Konnte in Schritt S4 dagegen der gewünschte Zielort in der zweiten Liste nicht oder nicht mit hinreichender Sicherheit gefunden werden, so wird anschließend in Schritt S5 der Nutzer zur Eingabe des Zielorts in einer zweiten Eingabeform aufgefordert. Dabei kann es sich insbesondere um die manuelle Eingabe des Zielortes oder um das Buchstabieren des Zielortes handeln. Der eingegebene Zielort wird nunmehr in Schritt S6 mit den in der ersten Liste, die auf der CD-ROM oder in der Zentralstelle abgespeichert ist, verglichen. In Schritt S7 wird geprüft, ob der Zielort in der ersten Liste gefunden wurde. Ist dies nicht der Fall so wird in Schritt S8 eine entsprechende Meldung an den Nutzer ausgegeben. Konnte der Zielort dagegen in der ersten Liste gefunden werden, so wird der Zielort nunmehr in die zweite Liste übertragen, wobei gleichzeitig die Phoneme des Zielortes mit in diese Liste übertragen werden, so daß bei einer erneuten akustischen Eingabe des Zielortes durch den Nutzer dieser Zielort in der zweiten Liste auffindbar ist. Anschließend wird in S10 die Routenplanung durchgeführt.

## Patentansprüche

1. Verfahren zur Auswahl einer Ortsbezeichnung in einem Kraftfahrzeug-Navigationssystem, das eine erste und eine zweite Liste mit Ortsbezeichnungen enthält, wobei in der zweiten Liste eine Teilmenge der in der ersten Liste enthaltenen Ortsbezeichnungen zusammen mit den Phonemen dieser Ortsbezeichnungen abspeicherbar ist, mit den Verfahrensschritten:
- Spracheingabe einer Ortsbezeichnung über ein Spracheingabesystem
- Bestimmung von Merkmalen der gesprochenen Ortsbezeichnung
- Vergleichen der Merkmale der gesprochenen Ortsbezeichnung mit Merkmalen der abgespeicherten Phoneme der Ortsbezeichnungen in der zweiten Liste
und entweder:
- Auswahl einer Ortsbezeichnung bei hinreichender Übereinstimmung der Merkmale der gesprochenen Ortsbezeichnung mit den Merkmalen der Phoneme einer abgespeicherten Ortsbezeichnung der zweiten Liste, oder andernfalls
- Anfordern einer weiteren Eingabe der Ortsbezeichnung in einer zweiten von der Spracheingabe der Ortsbezeichnung abweichenden Eingabeform,
- Auswählen einer Ortsbezeichnung aus der ersten Liste anhand der zweiten Eingabeform,
- Abspeichem der ausgewählten Ortsbezeichnung und der Phoneme der gesprochenen Ortsbezeichnung in der zweiten Liste.

2. Verfahren nach Anspruch 1, **dadurch gekennzeichnet, daß** den Ortsbezeichnung der ersten Liste Datensätze zugeordnet sind, wobei nach dem Auswählen einer Ortsbezeichnung aus der ersten Liste anhand der zweiten Eingabeform die ausgewählte Ortsbezeichnung mit dem zugehörigen Datensatz in der zweiten Liste abgespeichert wird.

3. Verfahren nach Anspruch 1 oder 2, **dadurch gekennzeichnet, daß** es sich bei der zweiten Eingabeform um eine manuelle Eingabe handelt.

4. Verfahren nach Anspruch 1 oder 2, **dadurch gekennzeichnet, daß** es sich bei der zweiten Eingabeform um eine Spracheingabe von Zahlen oder Buchstaben handelt.

5. Verfahren nach einem der vorhergehenden Ansprüche, **dadurch gekennzeichnet, daß** die Ortsbezeichnungen alphabetisch abgespeichert sind.

6. Verfahren nach einem der vorhergehenden Ansprüche, **dadurch gekennzeichnet, daß** die Häufigkeit der Eingabe einer Ortsbezeichnung aufgezeichnet wird.

7. Verfahren nach einem der vorhergehenden Ansprüche, **dadurch gekennzeichnet, daß** die Ortsbezeichnungen in der zweiten Liste nach der Häufigkeit ihrer Eingabe sortiert werden.

8. Verfahren nach einem der vorhergehenden Ansprüche, **dadurch gekennzeichnet, daß** die Ortsbezeichnungen in der zweiten Liste in der Reihenfolge ihrer Eingabe abgelegt werden.

9. Navigationssystem mit
- einem Spracheingabesystem zur Umwandlung von gesprochenen Worten in Merkmale bzw. eine Folge von Merkmalen,
- einem nicht-flüchtigen Speicherelement als erste Datenquelle, die eine Liste mit Ortsbezeichnungen enthält,
- einer zweiten Datenquelle, die einen Teil der Daten der ersten Datenquelle enthält,
- einer Steuereinheit (Recheneinheit 1 bzw. 21) zur Auswahl einer Ortsbezeichnung aufgrund der von dem Spracheingabesystem gelieferten Folge von Merkmalen,
**dadurch gekennzeichnet, daß** das Navigationssystem ein wiederbeschreibbares, nicht-flüchtiges Speicherelement als die zweite Datenquelle aufweist, wobei die zweite Datenquelle sowohl Ortsbezeichnungen als auch den Ortsbezeichnungen zugeordnete Phoneme der Ortsbezeichnungen enthält, die durch das Spracheingabesystem aufgrund der gesprochenen Ortsbezeichnung erzeugbar sind.

10. Navigationssystem nach Anspruch 9, **dadurch gekennzeichnet, daß** eine manuelle Eingabevorrichtung (2, 22) zur Eingabe von Ortsbezeichnungen in einer zweiten Eingabeform vorhanden ist.

11. Navigationssystem nach Anspruch 9 oder 10, **dadurch gekennzeichnet, daß** es weiterhin Mittel zur Positionsbestimmung (6-8; 26-28) des Fahrzeugs und Mittel zur Ausgabe von Zielführungsinformationen (3, 4; 23, 24) aufweist.

12. Navigationssystem nach einem der vorhergehenden Ansprüche 9 bis 11, **dadurch gekennzeichnet, daß** es ein Speicherelement mit Wegenetzdaten enthält.

13. Navigationssystem nach einem der vorhergehenden Ansprüche 9 bis 12, **dadurch gekennzeichnet, daß** es mit einem Mobilfunktelefon (25) verbunden ist.

14. Navigationssystem nach Anspruch 13, **dadurch gekennzeichnet, daß** die ausgewählte Ortsbezeichnung über ein Mobilfunksystem an eine externe Datenbank zur Generierung einer Fahrtroute übermittelbar ist.

15. Navigationssystem nach einem der vorhergehenden Ansprüche 9 bis 14, **dadurch gekennzeichnet, daß** es sich bei der ersten Datenquelle um eine externe Datenquelle handelt.

16. Navigationssystem nach einem der vorhergehenden Ansprüche 9 bis 15, **dadurch gekennzeichnet, daß** es sich bei der zweiten Datenquelle um eine externe Datenquelle handelt.

17. Navigationssystem nach einem der vorhergehenden Ansprüche 9 bis 16, **dadurch gekennzeichnet, daß** die Phoneme der zweiten Datenquelle vom Spracheingabesystem als Repräsentanten der gesprochenen Form der zu erkennenden Ortsbezeichnungen benutzt werden.

## Claims

1. Method for selecting a locality name in a motor vehicle navigation system which contains a first and a second list with locality names, in which arrangement a subset of the locality names contained in the first list, together with the phonemes of these locality names, can be stored in the second list, comprising the following method steps:
- voice input of a locality name via a voice input system
- determining features of the spoken locality name
- comparing the features of the spoken locality name with features of the stored phonemes of the locality names in the second list and, either:
- selecting a locality name if the features of the spoken locality name sufficiently correspond to the features of the phonemes of a stored locality name of the second list, or, if not,
- requesting a further input of the locality name in a second form of input differing from the voice input of the locality name,
- selecting a locality name from the first list by means of the second form of input,
- storing the selected locality name and the phonemes of the spoken locality name in the second list.

2. Method according to Claim 1, **characterized in that** data records are allocated to the locality name of the first list, the selected locality name being stored together with the associated data record in the second list after a locality name has been selected from the first list by means of the second form of input.

3. Method according to Claim 1 or 2, **characterized in that** the second form of input is a manual input.

4. Method according to Claim 1 or 2, **characterized in that** the second form of input is a voice input of numbers or letters.

5. Method according to one of the preceding claims, **characterized in that** the locality names are alphabetically stored.

6. Method according to one of the preceding claims, **characterized in that** the frequency of input of a locality name is recorded.

7. Method according to one of the preceding claims, **characterized in that** the locality names in the second list are sorted in accordance with the frequency in which they have been input.

8. Method according to one of the preceding claims, **characterized in that** the locality names in the second list are stored in the order in which they have been input.

9. Navigation system comprising
- a voice input system for converting spoken words into features or, respectively, a sequence of features,
- a non-volatile storage element as the first data source which contains a list with locality names,
- a second data source which contains some of the data of the first data source,
- a control unit (processing unit 1 or, respectively, 21) for selecting a locality name on the basis of the sequence of features supplied by the voice input system, **characterized in that** the navigation system has a rewritable non-volatile storage element as the second data source, this second data source containing both locality names and phonemes of the locality names associated with the locality names, which can be generated by the voice input system on the basis of the spoken locality name.

10. Navigation system according to Claim 9, **characterized in that** there is a manual input device (2, 22) for inputting locality names in a second form of input.

11. Navigation system according to Claim 9 or 10, **characterized in that** there are also means for determining the position (6-8; 26-28) of the vehicle, and means for outputting navigation information (3, 4; 23, 24).

12. Navigation system according to one of the preceding Claims 9 to 11, **characterized in that** there is a storage element containing road network data.

13. Navigation system according to one of the preceding Claims 9 to 12, **characterized in that** it is connected to a mobile radio telephone (25).

14. Navigation system according to Claim 13, **characterized in that** the selected locality name can be transmitted to an external database for generating a trip via a mobile radio system.

15. Navigation system according to one of the preceding Claims 9 to 14, **characterized in that** the first data source is an external data source.

16. Navigation system according to one of the preceding Claims 9 to 15, **characterized in that** the second data source is an external data source.

17. Navigation system according to one of the preceding Claims 9 to 16, **characterized in that** the phonemes of the second data source are used as representatives of the spoken form of the locality names to be detected by the voice input system.

## Revendications

1. Procédé permettant de sélectionner une désignation de lieu dans un système de navigation pour véhicules a utomobiles, renfermant une première liste de désignations de lieux et une deuxième liste de désignations de lieux, un sous-ensemble des désignations de lieux contenues dans la première liste pouvant être stocké dans la deuxième liste en commun avec les phonèmes de ces désignations de lieux, et comportant les étapes suivantes:
- saisie vocale d'une désignation de lieu à l'aide d'un système de saisie vocale,
- détermination de caractéristiques de la désignation de lieu prononcée,
- comparaison des caractéristiques de la désignation de lieu prononcée avec les caractéristiques des phonèmes des désignations de lieux enregistrés dans la deuxième liste
et, ou bien:
- sélection d'une désignation de lieu présentant une concordance suffisante entre les caractéristiques de la désignation de lieu prononcée et les caractéristiques des phonèmes des désignations de lieux enregistrés dans la deuxième liste,
ou, dans le cas contraire,
- sollicitation d'une autre saisie de la désignation de lieu sous une deuxième forme de saisie différente de la saisie vocale de la désignation de lieu,
- sélection d'une désignation de lieu dans la première liste à l'aide de la deuxième forme de saisie,
- mémorisation, dans la deuxième liste, de la désignation de lieu sélectionnée et des phonèmes de la désignation de lieu prononcée.

2. Procédé selon la revendication 1 **caractérisé par le fait que** des blocs de données enregistrés sont affectés aux désignations de lieux de la première liste, la désignation de lieu sélectionnée, après la sélection d'une désignation de lieu dans la première liste à l'aide de la deuxième forme de saisie, étant enregistrée dans la deuxième liste avec le bloc de données correspondant.

3. Procédé selon la revendication 1 ou 2 **caractérisé par le fait que** la deuxième forme de saisie est une saisie manuelle.

4. Procédé selon la revendication 1 ou 2 **caractérisé par le fait que** la deuxième forme de saisie est une saisie vocale de chiffres ou de lettres.

5. Procédé selon l'une des revendications précédentes **caractérisé par le fait que** les désignations de lieux sont mémorisées en ordre alphabétique.

6. Procédé selon l'une des revendications précédentes **caractérisé par le fait que** la fréquence de saisie d'une désignation de lieu est enregistrée.

7. Procédé selon l'une des revendications précédentes **caractérisé par le fait que** les désignations de lieux sont ordonnées dans la deuxième liste en fonction de la fréquence de leur saisie.

8. Procédé selon l'une des revendications précédentes **caractérisé par le fait que** les désignations de lieux sont mémorisées dans la deuxième liste dans l'ordre de succession de leur saisie.

9. Système de navigation comportant
- un système de saisie vocale permettant de convertir des mots prononcés en caractéristiques ou en une séquence de caractéristiques,
- un élément de mémorisation non volatile en tant que première source de données, qui renferme une liste de désignations de lieux,
- une deuxième source de données, qui renferme une partie des données de la première source de données,
- une unité de commande (unité de calcul 1 ou, respectivement, 21) permettant de sélectionner une désignation de lieu sur la base de la séquence de caractéristiques fournie par le système de saisie vocale,
**caractérisé par le fait que** le système de navigation comporte un élément de mémorisation réutilisable et non volatile en tant que deuxième source de données, la deuxième source de données renfermant non seulement des désignations de lieux, mais aussi des phonèmes des désignations de lieux affectés aux désignations de lieux, phonèmes qui peuvent être produits par le système de saisie vocale sur la base de la désignation de lieu prononcée.

10. Système de navigation selon la revendication 9 **caractérisé par le fait qu'**il existe un dispositif manuel de saisie (2, 22) permettant de saisir des désignations de lieux sous une deuxième forme de saisie.

11. Système de navigation selon la revendication 9 ou 10 **caractérisé par le fait qu'**il comporte, en outre, des moyens destinés à la détermination de la position (6-8; 26-28) du véhicule et des moyens destinés à éditer des informations de guidage vers la destination (3, 4; 23, 24).

12. Système de navigation selon l'une des revendications précédentes 9 à 11 **caractérisé par le fait qu'**il comprend un élément de mémorisation renfermant des données du réseau de routes.

13. Système de navigation selon l'une des revendications précédentes 9 à 12 **caractérisé par le fait qu'**il est relié à un téléphone de radio mobile (25).

14. Système de navigation selon la revendication 13 **caractérisé par le fait que** la désignation de lieu sélectionnée p eut être transmise par l'intermédiaire d'un système de radio mobile à une banque de données externe en vue de générer un itinéraire.

15. Système de navigation selon l'une des revendications précédentes 9 à 14 **caractérisé par le fait que** la première source de données est une source de données externe.

16. Système de navigation selon l'une des revendications précédentes 9 à 15 **caractérisé par** le f ait que la deuxième s ource de données e st u ne source d e données externe.

17. Système de navigation selon l'une des revendications précédentes 9 à 16 **caractérisé par le fait que** les phonèmes de la deuxième source de données sont utilisés par le système de saisie vocale en tant que représentants de la forme prononcée des désignations de lieux à reconnaître.
